# FASCICULE DE BREVET EUROPEEN

(11) **EP 0 395 516 B1**
(45) Date de publication et mention de la délivrance du brevet: **16.02.1994**
(21) Numéro de dépôt: 90401133.5
(22) Date de dépôt: 25.04.1990
(51) Int. Cl.: G10K 11/16

(54) **Procédé de mise en place d'un élément souple de grande dimension, tel qu'un panneau d'insonorisation, sur un réceptacle de forme conjuguée, tel qu'un tablier de véhicule automobile et dispositif pour la mise en oeuvre de ce procédé**
Verfahren zum Installieren eines flexiblen Elementes von grossen Abmessungen, wie eine schallabsorbierende Platte auf einem konjugierten Behälter, wie ein Armaturenbrett eines Autos, und Einrichtung zur Verwendung dieses Verfahrens
Process for installing a flexible element of large size, such as a sound absorbing panel on a conjugated receptacle, such as a car dashboard, and apparatus for applying this process

(30) Priorité: 26.04.1989 FR 8905548
(43) Date de publication de la demande: 31.10.1990
(73) Titulaire: AUTOMOBILES PEUGEOT, 75116 Paris (FR); AUTOMOBILES CITROEN, 92200 Neuilly-sur-Seine (FR)
(72) Inventeur: Mallebay, Eric, F-75015 Paris (FR); Lecailtel, Bruno, F-78960 Voisin-le-Bretonneux (FR)
(74) Mandataire: Durand, Yves Armand Louis

(56) Documents cités:
- DE-A- 2 924 197
- US-A- 3 966 526

## Description

La présente invention concerne un procédé de mise en place d'un élément souple de relativement grande dimension et non plan, tel que par exemple un panneau d'insonorisation, sur un réceptacle de forme conjuguée, tel que par exemple un tablier de véhicule automobile, ainsi qu'un dispositif pour la mise en oeuvre de ce procédé.

Les panneaux d'insonorisation ou insonorisants pour véhicules automobiles sont ainsi destinés à être placés sur des tabliers qui ne sont pas plans et présentent souvent dans l'espace des formes géométriques complexes avec des creux, des bosses, des ouvertures etc... . Pour cette raison, ces panneaux sont réalisés par moulage dans des moules reproduisant la forme du tablier. Pour que le panneau d'insonorisation assure pleinement sa fonction d'isolant phonique ou acoustique, il doit être souple et ne comporter aucune partie rigide. Cependant, au cours de manipulations de ces panneaux d'insonorisation, notamment lorsqu'on les empile dans des caisses ou conteneurs de stockage, les panneaux d'insonorisation inférieurs empilés supportent le poids de la partie supérieure de la pile : ils sont alors écrasés et perdent ainsi leur forme initiale. Ceci a pour inconvénient important que le robot destiné au montage des panneaux d'insonorisation sur les tabliers de véhicules automobiles n'a plus les références lui permettant de saisir un panneau d'insonorisation déformé puisque les positions des différents points du panneau d'insonorisation où doit s'effectuer la saisie de celui-ci relativement au moyen de préhension du robot sont pour la plupart supprimés du fait de la déformation du panneau.

L'invention a pour but de pallier l'inconvénient ci-dessus en proposant un procédé de mise en place d'un élément souple de relativement grande dimension et non plan, tel qu'un panneau d'insonorisation, sur un réceptacle de forme conjuguée, tel qu'un tablier de véhicule automobile, du type consistant à saisir ledit élément souple à un emplacement, notamment de stockage, où il est susceptible d'avoir perdu au moins une partie de sa forme initiale (voir par exemple EP-A- 0 226 706) et caractérisé en ce qu'il consiste ensuite à conformer l'élément souple afin de lui donner une forme correspondant à celle du réceptacle en le déposant sur un gabarit rigide reproduisant la forme du réceptacle, en faisant vibrer le gabarit afin que l'élément souple se mette automatiquement en place sur celui-ci et en arrêtant le mouvement vibratoire du gabarit lorsque l'élément souple présente la forme et la position voulues, à saisir de nouveau l'élément souple une fois conformé à l'aide d'un moyen de préhension et à amener l'élément souple sur le réceptacle et le déposer sur ce dernier.

Selon une autre caractéristique, le procédé consiste à saisir l'élément souple conformé en un certain nombre de points particuliers dont les positions les uns par rapport aux autres et par rapport au réceptacle sont déterminées pour que, lorsque ces points sont correctement mis en place sur le réceptacle précité, tout le reste de l'élément souple soit automatiquement correctement monté sur ou dans le réceptacle.

Avantageusement, la fréquence des vibrations appliquées au gabarit est de préférence d'environ 25 Hertz.

L'invention concerne également le dispositif pour la mise en oeuvre du procédé tel que défini ci-dessus et comprenant un gabarit rigide reproduisant la forme du réceptacle et destiné à recevoir l'élément souple et des moyens de mise en vibration du gabarit comportant l'élément souple comprenant une structure vibrante sur laquelle est monté le gabarit et un générateur de vibrations apte à faire vibrer ladite structure.

Avantageusement, le générateur de vibrations est un moteur vibrant monté sur la structure précitée.

Selon une caractéristique de l'invention, le dispositif comprend de plus un moyen de manutention destiné à saisir chaque élément souple d'une pile d'éléments souples située à l'emplacement de stockage, de préférence dans un conteneur, et à l'amener du conteneur au gabarit.

Selon encore une autre caractéristique de l'invention, le moyen de manutention comprend un support équipé d'un certain nombre de ventouses de préhension de chaque élément souple montées sur le support, chaque ventouse étant une ventouse à soufflet, de façon à pouvoir saisir chaque élément souple non plan.

Selon toujours une autre caractéristique de l'invention, plusieurs moyens de détection de la position des ventouses relativement à chaque élément souple sont associés respectivement aux ventouses et destinés à produire les signaux de sortie indiquant que les ventouses sont en mesure de saisir l'élément souple.

Selon encore une autre caractéristique de l'invention, le dispositif comprend une source d'air comprimé alimentant un venturi associé à chacune des ventouses pour qu'elles saisissent effectivement l'élément souple précité.

De préférence, le dispositif comprend en outre un robot de montage muni d'un moyen de préhension apte à saisir l'élément souple sur le gabarit en un certain nombre de points prédéterminés et le monter automatiquement sur ou dans le réceptacle.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
La figure 1 représente en perspective le dispositif conforme à l'invention faisant partie de la chaîne de mise en place d'un panneau d'insonorisation sur un tablier de véhicule automobile ;
La figure 2 est une vue en perspective agrandie du gabarit représenté en figure 1 ;
La figure 3 est une vue de face suivant la flèche III de la figure 1 du moyen de manutention d'élément souple ;
La figure 4 est une vue de dessus suivant la flèche IV de la figure 3 ; et
La figure 5 est une vue avant et en perspective d'une ventouse du moyen de manutention des figures 3 et 4.

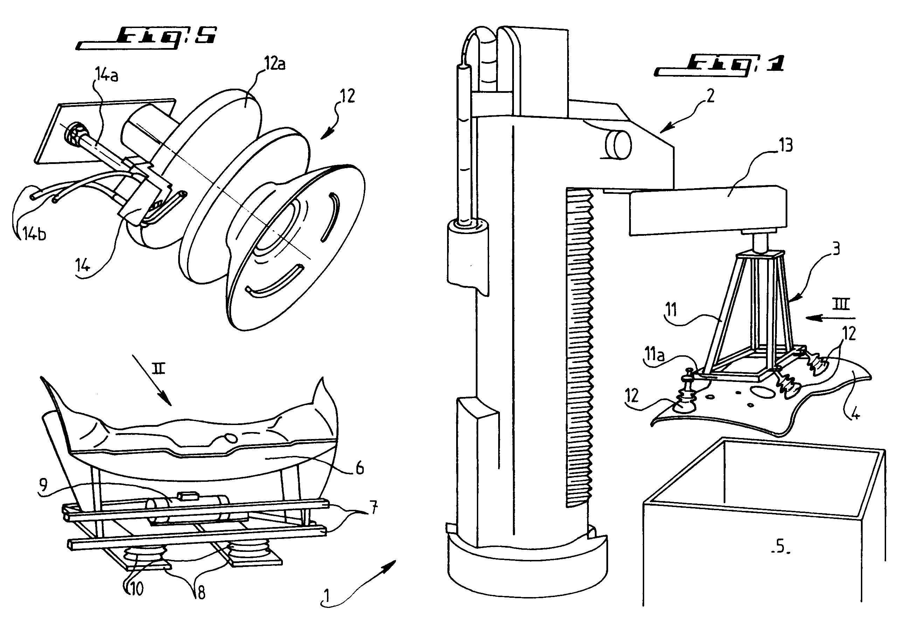

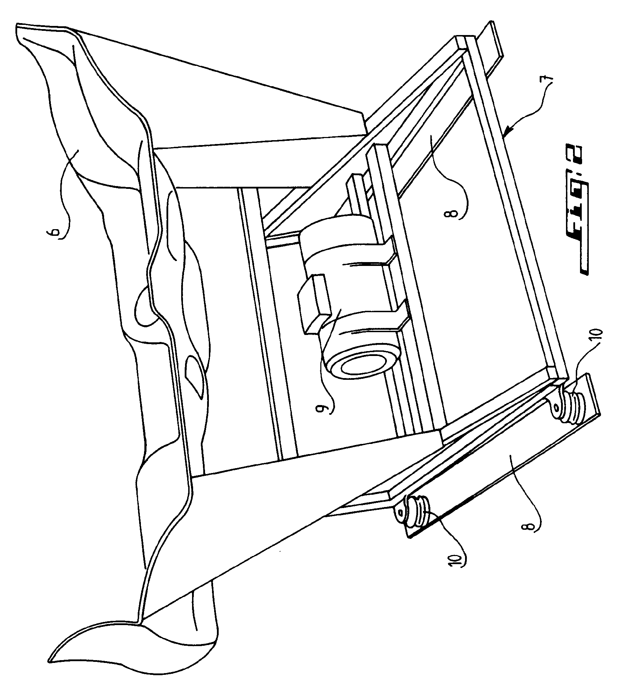

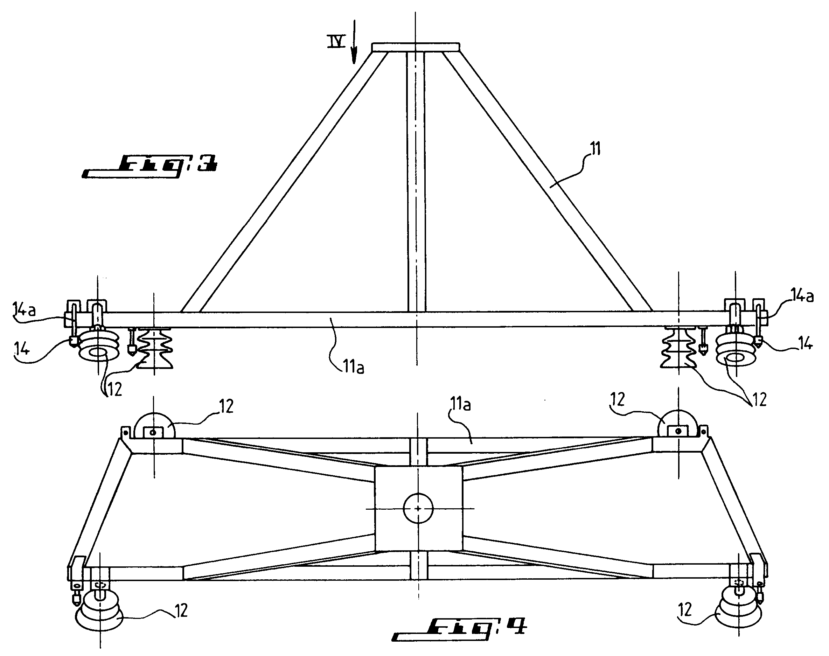

En se reportant aux figures, seul le dispositif 1 de l'invention faisant partie d'une chaîne de mise en place d'éléments souples tels que panneaux d'insonorisation sur des réceptacles tels que tabliers de véhicules automobiles est représenté.

Le dispositif 1 comprend un robot 2 à moyen 3 de manutention de panneaux souples, dont un seul 4 est représenté, empilés dans une caisse ou conteneur de stockage 5. Tout système de manutention autre que le robot 2 peut évidemment convenir pour saisir chaque élément souple 4 dans le conteneur 5. Chaque panneau souple 4, par exemple en mousse de polyuréthane avec septum en polychlorure de vinyle, est obtenu en plaçant une feuille de polychlorure de vinyle (septum préalablement ramolli par chauffage) dans un moule, créant une dépression au travers d'un moule inférieur pour que le septum épouse parfaitement toutes les formes en relief du moule inférieur, fermant le moule et injectant la mousse de polyuréthane et, après polymérisation, déchargement du moule et détourage du panneau, empilant le panneau dans le conteneur 5. Ainsi, chaque panneau souple 4 est réalisé par moulage dans un moule reproduisant la forme non plane du tablier de véhicule automobile. Cependant, lorsque les panneaux d'insonorisation souples 4 sont empilés dans le conteneur 5, ils perdent leur forme initiale, ce qui crée des difficultés de mise en place du panneau 4 sur le tablier du véhicule automobile.

Pour éliminer cet inconvénient, le dispositif 1 comprend un gabarit rigide 6 reproduisant la forme non plane du tablier du véhicule automobile et fixé à une structure métallique ou autre 7 pouvant vibrer relativement à un châssis fixe 8. Pour cela, un générateur de vibrations constitué dans le cas présent par un moteur vibrant 9 est solidarisé à la structure métallique 7 qui est assemblée au châssis fixe 8 par exemple par l'intermédiaire d'organes souples en caoutchouc 10 autorisant le mouvement vibratoire de la structure métallique 7 dans toute direction relativement au châssis fixe 8. De préférence, la fréquence de vibration du moteur vibrant 9 est d'environ 25 Hertz, le choix de la fréquence de vibration dépendant bien entendu de divers facteurs, par exemple de la nature de la matière constituant chaque panneau d'insonorisation 4.

Le moyen de manutention 3 comprend un treillis métallique 11 de support de ventouses de préhension 12 d'un panneau souple 4, dans le cas présent au nombre de quatre, et relié à l'extrémité d'un bras de manutention 13 du robot 2 pouvant se déplacer suivant une direction verticale. Le treillis 11 peut pivoter autour de son axe longitudinal relativement au bras 13. Les ventouses de préhension 12 sont montées rigidement approximativement aux quatre coins du cadre d'extrémité 11a du treillis 11 qui, par exemple, est réalisé à partir de tubes métalliques, de préférence en alliage d'aluminium. Les ventouses 12 sont du type à soufflet 12a relié, de manière connue, par l'intermédiaire d'une conduite (non représentée) à un venturi lui-même relié à une source d'air comprimé (non représentée) située par exemple dans le robot 2. Les soufflets permettent aux ventouses de se déformer pour saisir des objets non plans, cette déformabilité étant encore augmentée du fait que les ventouses sont en caoutchouc. Des dispositifs de détection 14 sont associés respectivement aux ventouses de préhension 12 et fixés au cadre 11a du treillis 11 à proximité de celles-ci par l'intermédiaire de tiges de fixation 14a. Les dispositifs de détection 14 sont reliés électriquement à une unité de contrôle et de commande associée au robot 2 contrôlant en temps réel les signaux d'information en sortie des dispositifs de détection 14 et commandant l'alimentation en air comprimé des venturis associés aux ventouses 12 pour saisir un panneau d'insonorisation 4 empilé. Plus précisément, chaque moyen de détection 14 fournit à l'unité de contrôle et de commande un signal indiquant que la ventouse 12 associée est en position, sur une partie correspondante du panneau d'insonorisation 4, de saisie de celui-ci et l'unité de contrôle et de commande déclenche l'alimentation en air comprimé des venturis (non représentés) associés aux ventouses 12 lorsqu'elle a reçu tous les signaux d'information provenant des moyens de détection 14 indiquant que toutes les ventouses 12 sont en position de saisie d'un panneau d'insonorisation 4. Les moyens de détection 14 peuvent être constitués comme cela est représenté par des micro-contacts actionnés lorsque les ventouses 12 sont à la position de saisie d'un panneau 4, mais il est bien entendu que tout autre type de moyen de détection, tel que par exemple des détecteurs de proximité, peut être utilisé. De plus, le moyen de préhension 3 a été décrit comme étant du type à ventouses mais celui-ci peut également être du type à griffes ou aiguilles.

Le procédé de mise en place d'un panneau d'insonorisation sur un tablier de véhicule automobile résulte déjà en partie de la description qui a été faite ci-dessus du dispositif de mise en oeuvre de ce procédé et va être maintenant détaillé.

Le robot 2 commande la descente du bras 13 au-dessus des panneaux d'insonorisation empilés dans le conteneur 5 jusqu'à ce que les ventouses de préhension 12 du moyen de manutention 3 soient en position de saisie d'un panneau d'insonorisation supérieur 4 dans le conteneur 5. A cette position, l'unité de contrôle et de commande du robot 2 commande l'alimentation en air comprimé des venturis associés aux ventouses 12 qui saisissent le panneau d'insonorisation 4 et le robot 2 amène l'ensemble bras 13-moyen de préhension 3-panneau 4 au-dessus du gabarit 6. L'unité de commande et de contrôle coupe l'alimentation en air comprimé des venturis associés aux ventouses 12 de façon que ces dernières relâchent le panneau d'insonorisation 4 qui tombe dans le gabarit 6 qui est soumis à vibration par la mise en service du générateur de vibrations 9. Sous l'effet conjugué des vibrations, de la gravité et des formes en contact du panneau d'insonorisation 4 et du gabarit 6, le panneau d'insonorisation 4 se déplace et se centre parfaitement dans ou sur le gabarit 6 pour épouser intimement le relief de ce dernier. A l'écoulement d'une temporisation déterminée en fonction du temps nécessaire pour que le panneau souple 4 épouse intimement le relief du gabarit 6, le mouvement vibratoire du gabarit 6 est arrêté par la mise hors service du générateur de vibrations 9.

En redonnant ainsi au panneau d'insonorisation 4 ses caractéristiques géométriques initiales connues, un robot de montage (non représenté) muni d'un moyen de préhension approprié saisit alors le panneau 4 en un certain nombre de points dont les positions les uns par rapport aux autres et par rapport au tablier sont déterminées pour que, lorsque ces derniers points sont correctement mis en place sur ou dans le réceptacle, tout le reste du panneau souple 4 soit automatiquement monté correctement sur ou dans le tablier dans d'excellentes conditions de précision.

Le procédé conforme à l'invention permet ainsi d'utiliser des conteneurs peu coûteux pour conditionner des pièces souples, telles que par exemple des panneaux d'insonorisation, destinés à être montés en automatique sur des véhicules automobiles, d'utiliser un matériel peu sophistiqué pour l'opération de dépalettisation des pièces souples, tout en permettant un recentrage simple, efficace et performant des pièces souples et une automatisation du montage de grandes pièces souples comme cela est le cas pour les panneaux d'insonorisation destinés à être montés sur ou dans des tabliers de véhicules automobiles.

## Revendications

1. Procédé de mise en place d'un élément souple de relativement grande dimension et non plan, tel qu'un panneau d'insonorisation, sur un réceptacle de forme conjuguée, tel qu'un tablier de véhicule automobile, du type consistant à saisir l'élément souple à un emplacement, notamment de stockage, où il est susceptible d'avoir perdu au moins une partie de sa forme initiale, caractérisé en ce qu'il consiste ensuite à conformer l'élément souple (4) afin de lui donner une forme correspondant à celle du réceptacle en le déposant sur un gabarit rigide (6) reproduisant la forme du réceptacle, en faisant vibrer le gabarit (6) afin que l'élément souple (4) se mette automatiquement en place sur celui-ci et en arrêtant le mouvement vibratoire du gabarit (6) lorsque l'élément souple (4) présente la forme et la position voulues, à saisir de nouveau l'élément souple (4) une fois conformé à l'aide d'un moyen de préhension et à amener l'élément souple (4) sur le réceptacle et l'y déposer.

2. Procédé selon la revendication 1, caractérisé en ce qu'il consiste à saisir l'élément souple conformé (4) en un certain nombre de points particuliers dont les positions les uns par rapport aux autres et par rapport au réceptacle sont déterminées pour que, lorsque ces points sont correctement mis en place sur le réceptacle, tout le reste de l'élément souple (4) soit automatiquement correctement monté sur ou dans le réceptacle.

3. Procédé selon l'une des revendications précédentes, caractérisé en ce que la fréquence des vibrations appliquées au gabarit (6) est de préférence d'environ 25 Hertz.

4. Dispositif pour la mise en oeuvre du procédé tel que défini aux revendications 1 à 3, caractérisé en ce qu'il comprend un gabarit rigide (6) reproduisant la forme du réceptacle et destiné à recevoir l'élément souple (4) et des moyens (7, 9) de mise en vibration du gabarit (6) comportant l'élément souple (4) et comprenant une structure vibrante (7) sur laquelle est monté le gabarit (6) et un générateur de vibrations (9) apte à faire vibrer ladite structure.

5. Dispositif selon la revendication 4, caractérisé en ce que le générateur de vibrations (9) est un moteur vibrant monté sur la structure précitée (7).

6. Dispositif selon la revendication 4 ou 5, caractérisé en ce qu'il comprend de plus un moyen de manutention (3) destiné à saisir chaque élément souple (4) d'une pile d'éléments souples située à l'emplacement de stockage de préférence dans un conteneur (5) et à l'amener du conteneur (5) au gabarit (6).

7. Dispositif selon l'une des revendications 4 à 6, caractérisé en ce que le moyen de manutention précité comprend un support (11) équipé d'un certain nombre de ventouses de préhension (12) de chaque élément souple (4) montées sur le support (11), chaque ventouse étant une ventouse à soufflet, de façon à pouvoir saisir chaque élément souple non plan (4).

8. Dispositif selon l'une des revendications 4 à 7, caractérisé en ce qu'il comprend plusieurs moyens de détection (14) de la position des ventouses (12) relativement à un élément souple (4) et qui, associés respectivement aux ventouses (12), sont destinés à produire des signaux de sortie indiquant que les ventouses (12) sont en mesure de saisir l'élément souple (4).

9. Dispositif selon la revendication 8, caractérisé en ce qu'il comprend une source d'air comprimé alimentant un venturi associé à chacune des ventouses (12) pour qu'elles saisissent effectivement l'élément souple (4) précité.

10. Dispositif selon l'une des revendications 4 à 9, caractérisé en ce qu'il comprend en outre un robot de montage muni d'un moyen de préhension apte à saisir l'élément souple (4) sur le gabarit (6) en un certain nombre de points prédéterminés et le monter automatiquement sur ou dans le réceptacle précité.

## Patentansprüche

1. Verfahren zum Einsetzen eines unebenen nachgiebigen Elementes verhältnismässig grosser Abmessung, wie einer Schalldämmungstafel, an einem Aufnahmemittel formschlüssig entsprechender Gestalt, wie einer Kraftfahrzeugswindlaufstirnwand, derjenigen Gattung, die darin besteht, das nachgiebige Element an einer insbesondere Speicherungsstelle, wo es wenigstens einen Teil seiner Ursprungsgestalt verloren haben kann, zu ergreifen, dadurch gekennzeichnet, dass das Verfahren weiterhin darin besteht, das nachgiebige Element (4) zu gestalten, um ihm eine derjenigen des Aufnahmemittels entsprechende Gestalt zu geben, indem man es auf eine die Gestalt des Aufnahmemittels wiedergebende starre Schablone (6) ablegt, die Schablone (6) in Schwingungen versetzt, damit das nachgiebige Element (4) sich selbsttätig an diesem in Stellung setzt und die Schwingbewegung der Schablone (6) aufhält, wenn das nachgiebige Element (4) die gewünschte Gestalt und Lage aufweist, das einmal gestaltete nachgiebige Element (4) mit Hilfe eines Greifermittels erneut zu ergreifen und das nachgiebige Element (4) über das Aufnahmemittel zu führen und es dort abzulegen.

2. Verfahren nach Anspruch 1, dadurch gekennzeichnet, dass es darin besteht, das gestaltete nachgiebige Element (4) an einer gewissen Anzahl von Sonderpunkten zu ergreifen, deren Stellungen einandergegenüber und in Bezug auf das Aufnahmemittel derart bestimmt sind, dass, wenn diese Punkte an dem Aufnahmemittel richtig in Stellung gebracht worden sind, der ganze Rest des nachgiebigen Elementes (4) auf oder in das Aufnahmemittel richtig automatisch auf- bzw. eingesetzt wird.

3. Verfahren nach einem der vorangehenden Ansprüche, dadurch gekennzeichnet, dass die Frequenz der an die Schablone (6) angelegten Schwingungen vorzugsweise ungefähr 25 Hertz beträgt.

4. Vorrichtung zur Durchführung des Verfahrens, wie in den Ansprüchen 1 bis 3 bestimmt, dadurch gekennzeichnet, dass sie eine die Gestalt des Aufnahmemittels wiedergebende, zur Aufnahme des nachgiebigen Mittels (4) bestimmte steife Schablone (6) und Mittel (7, 9), um die das nachgiebige Element (4) aufweisende Schablone (6) in Schwingung zu versetzen aufweist, wobei diese Mittel eine vibrierendes Gestell (7), auf welchem die Schablone (6) und ein Schwingungserzeuger (9), der fähig ist, das besagte Gestell in Schwingung zu versetzen, angeordnet sind, aufweist.

5. Vorrichtung nach Anspruch 4, dadurch gekennzeichnet, dass der Schwingungserzeuger (9) ein an dem vorgenannten Gestell (7) angeordneter vibrierender Motor ist.

6. Vorrichtung nach Anspruch 4 oder 5, dadurch gekennzeichnet, dass sie ausserdem ein Fördermittel (3) umfasst, das bestimmt ist, jedes nachgiebige Element (4) von einem an der Speicherstelle vorzugsweise in einem Behälter (5) gelegenen Stapel von nachgiebigen Elementen zu ergreifen und es von dem Behälter (5) zur Schablone (6) zu bringen.

7. Vorrichtung nach einem der Ansprüche 4 bis 6, dadurch gekennzeichnet, dass das vorgenannte Fördermittel einen Halter (11), der mit einer gewissen Anzahl von an dem Halter (11) angeordneten Saugnäpfchen (12) zum ergreifen jedes nachgiebigen Elementes (4) ausgerüstet ist, wobei jedes Saugnäpchen ein Saugnäpchen mit Balg ist, um jedes unebene nachgiebige Element (4) ergreifen zu können.

8. Vorrichtung nach einem der Ansprüche 4 bis 7, dadurch gekennzeichnet, dass sie mehrere Gebermittel (14) zum Aufspüren der Stellung der Saugnäpchen (12) im Verhältnis zu einem nachgiebigen Element (4) umfasst, welche jeweils den Saugnäpchen (12) zugeordnet sind und bestimmt sind, Ausgangssignale zu erzeugen, die melden, dass die Saugnäpchen (12) in der Lage sind, das nachgiebige Element (4) zu ergreifen.

9. Vorrichtung nach Anspruch 8, dadurch gekennzeichnet, dass sie eine Druckluftquelle umfasst, die eine jedem der Saugnäpchen (12) zugeordnete Venturidüse speist, damit die Saugnäpchen das vorgenannte nachgiebige Element (4) tatsächlich ergreifen.

10. Vorrichtung nach einem der Ansprüche 4 bis 9, dadurch gekennzeichnet, dass sie ausserdem einen Montageroboter aufweist, der mit einem Greifermittel versehen ist, das fähig ist, das nachgiebige Element (4) auf der Schablone (6) an einer gewissen Anzahl von vorbestimmten Punkten zu ergreifen und es automatisch auf oder in das vorgenannte Aufnahmemittel auf- bzw. einzusetzen.

## Claims

1. Method of installing a flexible non planar element of relatively great size such as a soundproofing panel onto a receptacle of complementary mating shape such as an apron of an automotive vehicle, of the type consisting in gripping the flexible element at a in particular storage place where it is likely to have lost at least one part of its initial shape, characterized in that it then consists in shaping the flexible element (4) in order to give it a shape corresponding to that of the receptacle by depositing it upon a rigid jig (6) reproducing the shape of the receptacle, in causing the jig (6) to vibrate in order that the flexible element (4) automatically positions itself upon the latter and in stopping the vibratory motion of the jig (6) when the flexible element (4) exhibits the desired shape and position, in again gripping the flexible element (4) once shaped with the assistance of a gripping means and in bringing the flexible element (4) over the receptacle and laying it down thereon.

2. Method according to claim 1, characterized in that it consists in gripping the shaped flexible element (4) at a certain number of particular points the positions of which with respect to each other and with respect to the receptacle are determined in order that, when these points are properly positioned onto the receptacle, all the remainder of the flexible element (4) be automatically correctly mounted upon or into the receptacle.

3. Method according to one of the foregoing claims, characterized in that the frequency of the vibrations applied to the jig (6) is preferably of about 25 hertzs.

4. Device for carrying out the method such as defined in claims 1 to 3, characterized in that it comprises a rigid jig (6) reproducing the shape of the receptacle and intended to receive the flexible element (4) and means (7, 9) for setting in vibration the jig (6) comprising the flexible element (4) and comprising a vibrating structure (7) onto which is mounted the jig (6) and a vibration generator (9) adapted to cause the said structure to vibrate.

5. Device according to claim 4, characterized in that the vibration generator (9) is a vibrating motor mounted onto the aforesaid structure (7).

6. Device according to claim 4 or 5, characterized in that it further comprises a handling means (3) intended to grip each flexible element (4) from a stack of flexible elements located at the storage place preferably in a container (5) and to bring it from the container (5) to the jig (6).

7. Device according to one of claims 4 to 6, characterized in that the aforesaid handling means comprises a support (11) fitted with a certain number of suction cups (12) for the gripping of each flexible element (4), mounted onto the support (11), each suction cup being a suction cup with a bellows in order that it may grip each non-flat flexible element (4).

8. Device according to one of claims 4 to 7, characterized in that it comprises several means (14) for the detection of the position of the suction cups (12) in relation to a flexible element (4) and which, associated with the suction cups (12), respectively, are intended to produce output signals indicating that the suction cups (12) are in a position to grip the flexible element (4).

9. Device according to claim 8, characterized in that it comprises a source of compressed air feeding a Venturi nozzle associated with each one of the suction cups (12) in order that they effectively grip the aforesaid flexible element (4).

10. Device according to one of claims 4 to 9, characterized in that it further comprises a mounting robot provided with a gripping means apt to grip the flexible element (4) upon the jig (6) at a certain number of predetermined points and to automatically mount it onto or into the aforesaid receptacle.
